# EUROPEAN PATENT SPECIFICATION

(11) **EP 4 425 622 B1**
(45) Date of publication and mention of the grant of the patent: **06.05.2026**
(21) Application number: 22901877.5
(22) Date of filing: 02.12.2022
(51) Int. Cl.: H01M 10/04, B65H 19/12

(54) **AUTOMATIC SEPARATOR SUPPLY DEVICE**
AUTOMATISCHE ZUFÜHRVORRICHTUNG FÜR SEPARATOR
DISPOSITIF D'ALIMENTATION DE SÉPARATEUR AUTOMATIQUE

(30) Priority: 02.12.2021 KR 20210171352
(43) Date of publication of application: 04.09.2024
(73) Proprietor: LG Energy Solution, Ltd., Seoul 07335 (KR)
(72) Inventor: KWON, Ki Sun, Daejeon 34122 (KR); KANG, Ryeon Ho, Daejeon 34122 (KR); LEE, Gil Young, Daejeon 34122 (KR); KIM, Min Ki, Daejeon 34122 (KR)
(74) Representative: Plasseraud IP
(86) International application number: PCT/KR2022/019533
(87) International publication number: WO 2023/101519

(56) References cited:
- KR-A- 20070 059 397
- KR-A- 20170 054 829
- KR-A- 20210 029 448
- KR-A- 20210 048 957
- KR-B1- 100 899 419

## Description

### TECHNICAL FIELD

### CROSS-REFERENCE TO RELATED APPLICATION

The present application claims the benefit of the priority of Korean Patent Application Nos. 10-2021-0171352, filed on December 02, 2021, and 10-2022-0166549, filed on December 02, 2022.

### TECHNICAL FIELD

The present invention relates to an automatic separator supply apparatus.

### BACKGROUND ART

Secondary batteries, unlike primary batteries, can be recharged and have been extensively researched and developed in recent years due to small sizes and high capacities thereof. As technology development and demands for mobile devices increase, the demands for secondary batteries as energy sources are rapidly increasing.

The secondary batteries are classified into coin-type batteries, cylindrical batteries, prismatic batteries, and pouch-type batteries depending on shapes of battery cases. In such a secondary battery, an electrode assembly installed inside a battery case serves as a chargeable and dischargeable power generating element that has a structure in which an electrode and a separator are stacked.

The electrode assemblies may be generally classified into: a jelly-roll-type battery in which a separator is interposed between a positive electrode and a negative electrode, each of which has the form of a sheet coated with an active material, and then wound; a stacking-type battery in which a plurality of positive and negative electrodes are sequentially stacked with separators therebetween; and a stacking/folding-type battery in which stacking-type unit cells are wound together with a long separating film.

The jelly roll-type electrode assemblies are manufactured by winding separators and electrodes such as positive electrodes and negative electrodes, and a separator roll, on which a separator is wound, for supplying the separator during a winding process is manually replaced.

This replacement causes an operator to stop operation of equipment when manually replacing the separator roll, and accordingly, a loss of a material replacement load of the operator occurs.

KR 20170054829 A discloses materials exchanging device of winding equipment for secondary battery.

### DISCLOSURE OF THE INVENTION

### TECHNICAL PROBLEM

An aspect of the present invention is to provide an automatic separator supply apparatus capable of automatically supplying a separator.

### TECHNICAL SOLUTION

An automatic separator supply apparatus according to an embodiment of the present invention is an apparatus for supplying a separator winding roll, the apparatus laid out in appended claim 1.

### ADVANTAGEOUS EFFECTS

According to the present invention, when an electrode assembly is manufactured by winding an electrode and a separator, the separator may be automatically supplied, via a transfer unit, to an unwinder that provides a separator to be wound. In addition, a lift unit and an article supply unit are further provided, and thus, the separator may be more easily and automatically supplied.

A separator winding roll is mounted to an unwinder shaft of an unwinder after a unit shaft of the transfer unit, on which the separator winding roll is positioned, is aligned with the unwinder shaft of the unwinder, and thus, the separator winding roll may be easily mounted to the unwinder.

### BRIEF DESCRIPTION OF THE DRAWINGS

FIG. 1 is a plan view showing an article supply unit and a lift unit in an automatic separator supply apparatus according to an embodiment of the present invention.
FIG. 2 is a front view showing an article supply unit and a lift unit in an automatic separator supply apparatus according to an embodiment of the present invention.
FIG. 3 is a plan view showing a state in which a separator winding roll is being conveyed from an article supply unit to a lift unit in an automatic separator supply apparatus according to an embodiment of the present invention.
FIG. 4 is a plan view showing a state in which a lift unit is rotating after a separator winding roll is conveyed to the lift unit in an automatic separator supply apparatus according to an embodiment of the present invention.
FIG. 5 is a plan view showing a state in which a lift unit has been lowered in an automatic separator supply apparatus according to an embodiment of the present invention, but a separator winding roll is in a state before being conveyed to a transfer unit.
FIG. 6 is a plan view showing a state in which a separator winding roll is being conveyed from a lift unit to a transfer unit in an automatic separator supply apparatus according to an embodiment of the present invention.
FIG. 7 is a plan view showing a state in which a transfer unit is moving after a separator winding roll is conveyed to the transfer unit in an automatic separator supply apparatus according to an embodiment of the present invention.
FIG. 8 is a front view showing a state in which a transfer unit is moving after a separator winding roll is conveyed to the transfer unit in an automatic separator supply apparatus according to an embodiment of the present invention.
FIG. 9 is a plan view showing a state in which a separator winding roll is being conveyed from a transfer unit to an unwinder in an automatic separator supply apparatus according to an embodiment of the present invention.
FIG. 10 is a plan view showing a state in which a separator winding roll has been conveyed to an unwinder in an automatic separator supply apparatus according to an embodiment of the present invention.
FIG. 11 is a cross-sectional view taken along line A-A' of FIG. 2.

### MODE FOR CARRYING OUT THE INVENTION

The objects, specific advantages, and novel features of the present invention will be more clearly understood from the following detailed description and preferred embodiments taken in conjunction with the accompanying drawings. In the specification, when reference numerals are given to elements in each drawing, it should be noted that the same elements will be designated by the same reference numerals if possible although they are shown in different drawings. Also, the present invention may be embodied in various different forms, and is not limited to the embodiments described herein. In addition, in describing the present invention, detailed description related to well-known functions will be omitted so as not to unnecessarily obscure subject matters of the present invention.

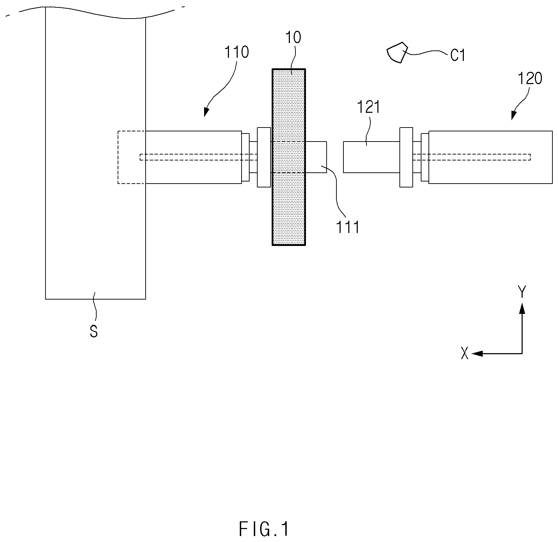

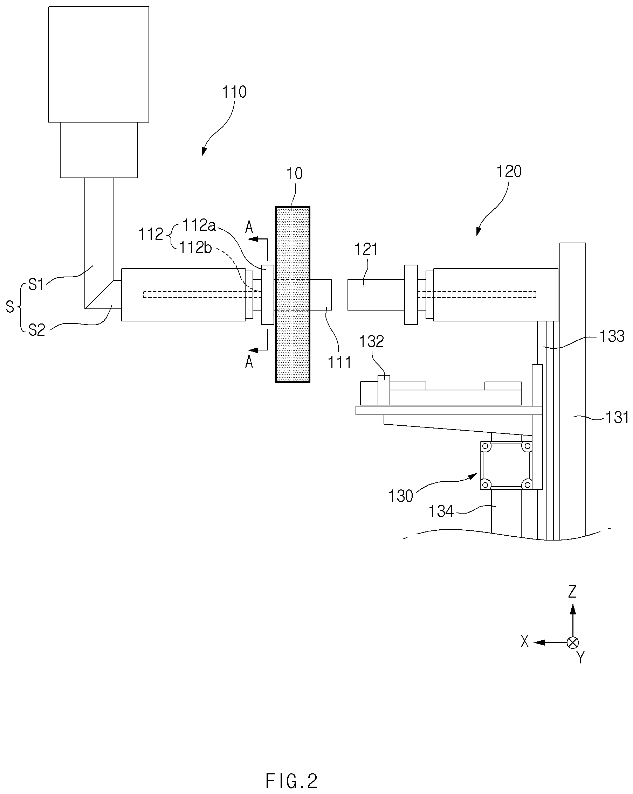

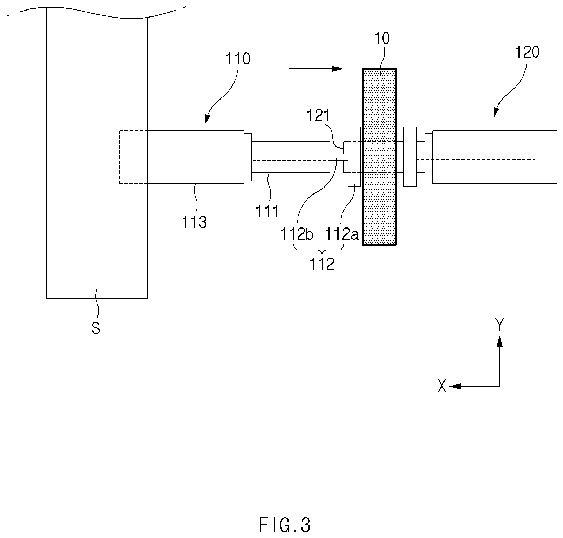

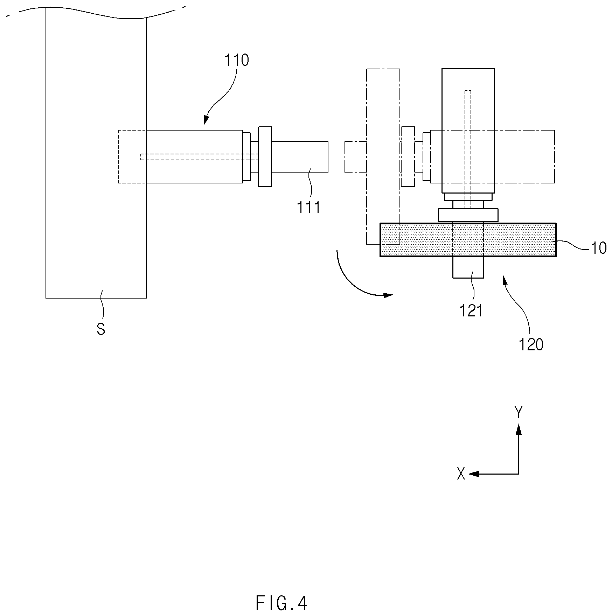

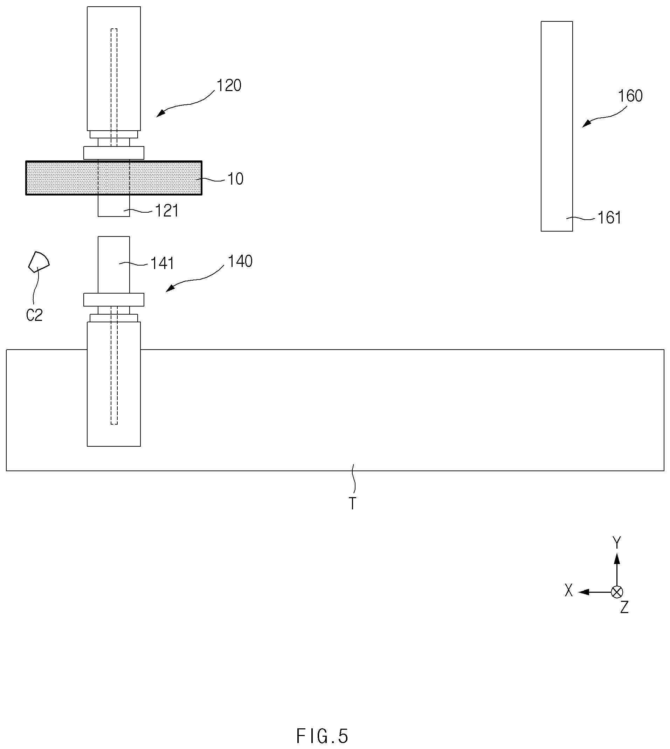

FIG. 1 is a plan view showing an article supply unit and a lift unit in an automatic separator supply apparatus according to an embodiment of the present invention, FIG. 2 is a front view showing an article supply unit and a lift unit in an automatic separator supply apparatus according to an embodiment of the present invention, and FIG. 3 is a plan view showing a state in which a separator winding roll is being conveyed from an article supply unit to a lift unit in an automatic separator supply apparatus according to an embodiment of the present invention. Also, FIG. 4 is a plan view showing a state in which a lift unit is rotating after a separator winding roll is conveyed to the lift unit in an automatic separator supply apparatus according to an embodiment of the present invention, and FIG. 5 is a plan view showing a state in which a lift unit has been lowered in an automatic separator supply apparatus according to an embodiment of the present invention, but a separator winding roll is in a state before being conveyed to a transfer unit.

Referring to FIGS. 1 to 5, an automatic separator supply apparatus according to an embodiment of the present invention is

an apparatus for supplying a separator winding roll 10, on which a separator is wound, to manufacture an electrode assembly by winding an electrode and the separator, and includes a transfer unit 140 for moving the received separator winding roll 10 and an unwinder 160 including an unwinder shaft 161 to which the separator winding roll 10 moved by the transfer unit is mounted.

Also, the automatic separator supply apparatus according to an embodiment of the present invention may further include a lift unit 120 that receives the separator winding roll 10 and conveys the separator winding roll to the transfer unit 140 and an article supply unit 110 that supplies the separator winding roll 10 to the lift unit 120.

In addition, the automatic separator supply apparatus according to an embodiment of the present invention may further include a supply alignment sensor C1, a lift alignment sensor C2, and an unwinder alignment sensor C3.

Referring to FIGS. 1 to 3, the article supply unit 110 may supply the lift unit 120 with the separator winding roll 10 on which a separator is wound.

The article supply unit 110 may include a supply shaft 111, on which the separator winding roll 10 is positioned, to supply the separator winding roll 10. Here, the article supply unit 110 may further include a supply cylinder 113 and a supply cylinder shaft 112 mounted to the supply cylinder 113. Here, the separator winding roll 10 positioned on the supply shaft 111 is pushed and moved toward the lift unit 120 by movement of the supply cylinder shaft 112, and the separator winding roll 10 may be mounted to the lift unit 120.

The supply cylinder shaft 112 may include a supply movement shaft 112b and a supply block 112a provided in the supply movement shaft 112b.

The supply block 112a faces, for example, a surface of the separator winding roll 10 on one side, and the supply block 112a may move the separator winding roll 10 in a direction toward the other side as the supply movement shaft 112b moves in a direction toward the other side. Here, for example, a distance between the supply shaft 111 of the article supply unit 110 and a lift shaft 121 of the lift unit 120 may be smaller than a width of the separator winding roll 10.

Also, the article supply unit 110 may mount the separator winding roll 10 to the lift shaft 121 of the lift unit 120 after the supply shaft 111 is aligned with the lift shaft 121 of the lift unit 120. Here, the supply alignment sensor C1 may detect an alignment state between the supply shaft 111 of the article supply unit 110 and the lift shaft 121 of the lift unit 120.

Also, the article supply unit 110 may include a moving jig S for moving the article supply unit 110. The moving jig S may include a horizontal part S2, to which the supply cylinder 113 of the article supply unit 110 is mounted, and a vertical part S1 connected to the horizontal part S2.

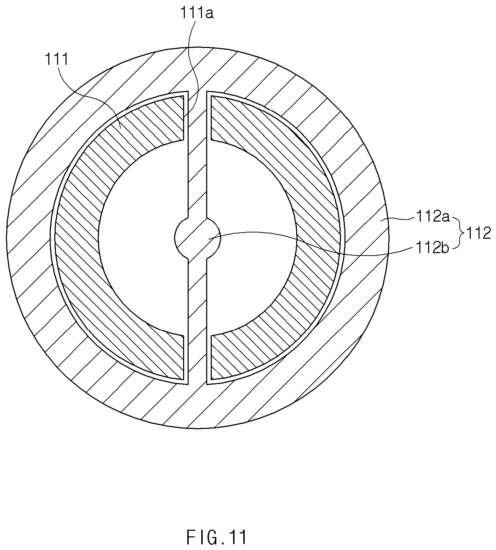

FIG. 11 is a cross-sectional view taken along line A-A' of FIG. 2. Here, FIG. 11 is shown as omitting the moving jig S.

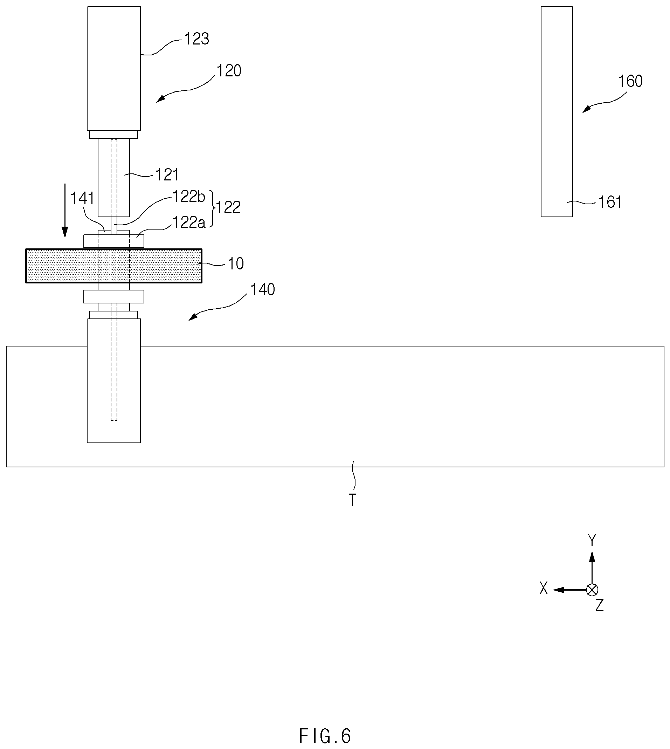

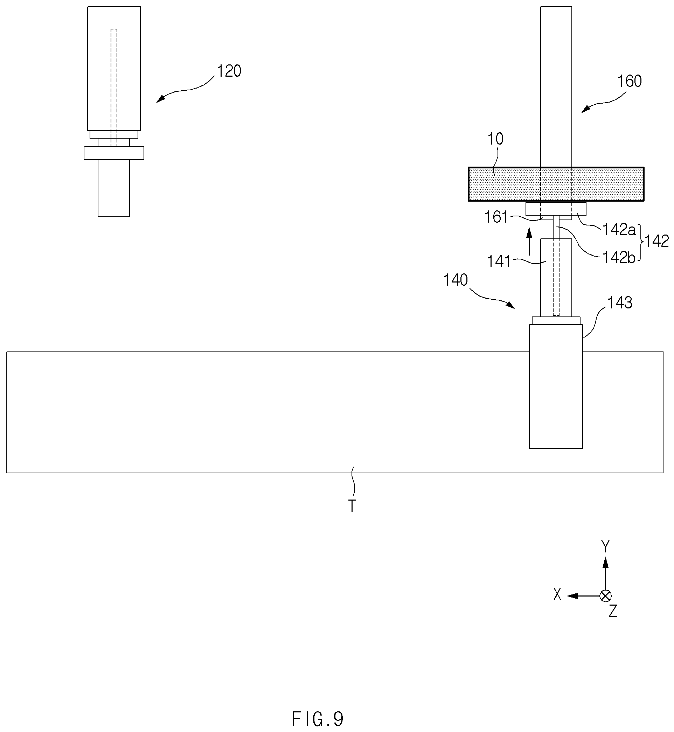

Referring to FIGS. 2 and 11, a slit-shaped slide hole 111a is formed on a side portion of the supply shaft 111, and the supply block 112a and the supply movement shaft 112b may be connected to each other. That is, the supply shaft 111 has the inner space for accommodating the supply movement shaft 112b and the slide hole 111a passing through the outside of the supply shaft, and thus, the supply movement shaft 112b may be extended and connected to the supply block 112a via the slide hole 111a. Therefore, the supply block 112a may be easily moved by the movement of the supply movement shaft 112b. Here, the slide hole 111a may be formed in the supply shaft 111 in an X-axis direction in which the supply movement shaft 112b moves. Also, like the supply shaft 111 of the article supply unit 110, a slit-shaped slide hole is also formed on a side portion of the lift shaft 121 of the lift unit 120 which is described below, and thus, a lift block 122a and a lift movement shaft 122b may be connected to each other (see FIG. 6). In addition, like the supply shaft 111 of the article supply unit 110, a slit-shaped slide hole is also formed on a side portion of a unit shaft 141 of the transfer unit 140 which is described below, and thus, a transfer block 142a and a transfer movement shaft 142a may be connected to each other (see FIG. 9).

FIG. 6 is a plan view showing a state in which a separator winding roll is being conveyed from a lift unit 120 to a transfer unit in an automatic separator supply apparatus according to an embodiment of the present invention.

Referring to FIGS. 4 to 6, the lift unit 120 may receive the separator winding roll 10 from the article supply unit 110 and convey the same to the transfer unit 140. Here, the lift unit 120 may include the lift shaft 121 on which the separator winding roll 10 supplied from the article supply unit 110 is positioned.

Also, the lift unit 120 may rotate horizontally and move vertically to convey the received winding roll 10 to the transfer unit 140. Here, for example, the horizontal direction may represent a direction on an XY-axis plane, and the vertical direction may represent a Z-axis direction.

In addition, the lift unit 120 receives the separator winding roll 10 from the article supply unit 110 and then rotates to be positioned parallel to the unit shaft 141 of the transfer unit 140 in the Y-axis direction. Subsequently, the lift unit is moved downward and may be positioned on the same line as the unit shaft 141 of the transfer unit 140. Here, when rotating, for example, 90 degrees, the lift unit 120 may be set to be positioned in a direction parallel to the unit shaft 141 of the transfer unit 140.

Also, the lift unit 120 may include a lift means 130 provided in a lower portion of the lift unit, and may be moved up and down by the lift means 130 and convey the separator winding roll 10 to the transfer unit 140. The lift means 130 may include a vertical shaft 131, a moving part 132 moving along the vertical shaft 131, and a moving shaft 134 moving the moving part 132. Here, the lift means 130 may further include a fixing part 133 for fixing the moving part 132 and the lift unit 120. The moving shaft 134 may be coupled to, for example, an actuator and moved up and down by the actuator. The moving part 132 is provided at an end of the moving shaft 134 and moved up and down by the movement of the moving shaft 134, and may support a lower portion of the separator winding roll 10 mounted to the lift unit 120.

Also, the lift unit 120 may further include a rotating means provided below the lift means 130, and the lift unit 120 may be rotated by horizontally rotating the lift means 130 with the rotating means. (Here, the rotating means is a means for rotating a shaft with a rotational force of a motor. Since such a means is well-known in the art, a detailed description thereof is omitted.)

In addition, the lift unit 120 may further include a lift cylinder 123 and a lift cylinder shaft 122 mounted to the lift cylinder 123. Here, the separator winding roll 10 positioned on the lift shaft 121 is pushed and moved toward the transfer unit 140 by movement of the lift cylinder shaft 122, and the separator winding roll 10 may be mounted to the unit shaft 141 of the transfer unit 140.

The lift movement shaft 122 may include a lift movement shaft 122b and a lift block 122a provided in the lift movement shaft 122b.

The lift block 122a faces, for example, a surface of the separator winding roll 10 on one side, and the lift block 122a may move the separator winding roll 10 in a direction toward the other side as the lift movement shaft 122b moves in the direction toward the other side.

Also, the lift unit 120 may mount the separator winding roll 10 to the unit shaft 141 of the transfer unit 140 after the lift shaft 121 is aligned with the unit shaft 141 of the transfer unit 140. Here, the lift alignment sensor C2 may detect an alignment state between the lift shaft 121 of the lift unit 120 and the unit shaft 141 of the transfer unit 140. Accordingly, the transfer unit 140 may adjust the amount of vertical movement of the lift means 130 with reference to the detection value by the lift alignment sensor C2, and easily align the lift shaft 121 of the lift unit 120 with the unit shaft 141 of the transfer unit 140.

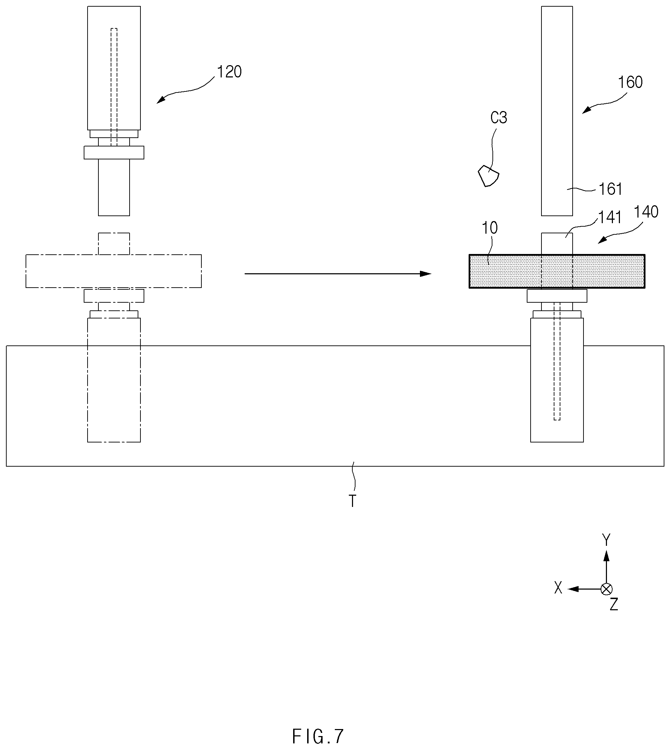

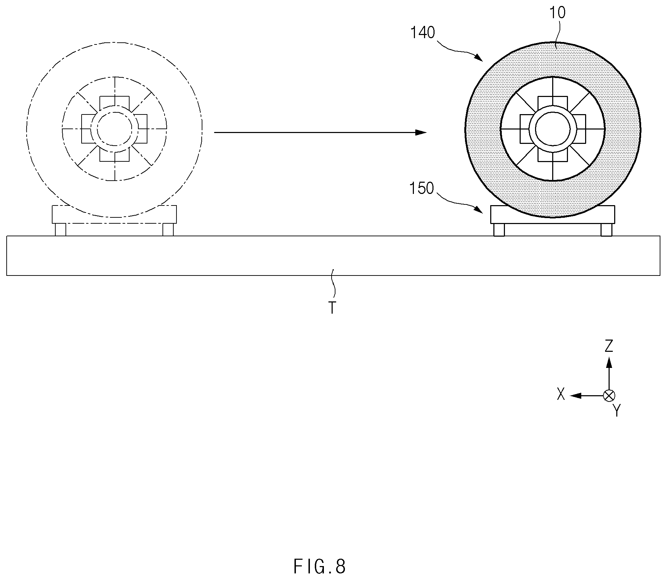

FIG. 7 is a plan view showing a state in which a transfer unit is moving after a separator winding roll is conveyed to the transfer unit in an automatic separator supply apparatus according to an embodiment of the present invention, and FIG. 8 is a front view showing a state in which a transfer unit is moving after a separator winding roll is conveyed to the transfer unit in an automatic separator supply apparatus according to an embodiment of the present invention.

Referring to FIGS. 7 and 8, the transfer unit 140 may include the unit shaft 141 that receives the separator winding roll 10 from the lift unit 120, and may move the received separator winding roll 10.

In addition, the transfer unit 140 may further include a transfer cylinder 143 and a transfer cylinder shaft 142 mounted to the transfer cylinder 143. Here, the separator winding roll 10 positioned on the unit shaft 141 is pushed and moved toward the unwinder shaft 161 of the unwinder 160 by movement of the transfer cylinder shaft 142, and the separator winding roll 10 may be mounted to the unwinder shaft 161.

The transfer cylinder shaft 142 may include a transfer movement shaft 142a and a transfer block 142a provided in the transfer movement shaft 142a.

The transfer block 142a faces, for example, a surface of the separator winding roll 10 on one side, and the transfer block 142a may move the separator winding roll 10 in a direction toward the other side as the transfer movement shaft 142a moves in the direction toward the other side.

Also, the unit shaft 141 of the transfer unit 140 may be positioned at the same height as the unwinder shaft 161. Here, the transfer unit 140 may include a traveling means 150 provided in a lower portion of the transfer unit, and may be horizontally moved by the traveling means 150 and convey the separator winding roll 10 to the unwinder 160. Here, the transfer unit 140 may be moved, for example, in the X-axis direction.

The traveling means 150 may move along an upper surface of a support table T. Here, for example, the traveling means 150 may include a wheel in contact with the upper surface of the support table T and a motor for rotating the wheel. The wheel is coupled to a rotary shaft of the motor and rotated by the operation of the motor, and may horizontally move along the upper surface of the support table T.

Also, the transfer unit 140 may mount the separator winding roll 10 to the unwinder shaft 161 of the unwinder 160 after the unit shaft 141 is aligned with the unwinder shaft 161 of the unwinder 160. Here, the unwinder alignment sensor C3 may detect an alignment state between the unit shaft 141 of the transfer unit 140 and the unwinder shaft 161 of the unwinder 160. Accordingly, the transfer unit 140 may adjust the amount of horizontal movement of the traveling means 150 with reference to the detection value by the unwinder alignment sensor C3, and align the unit shaft 141 of the transfer unit 140 with the unwinder shaft 161 of the unwinder 160.

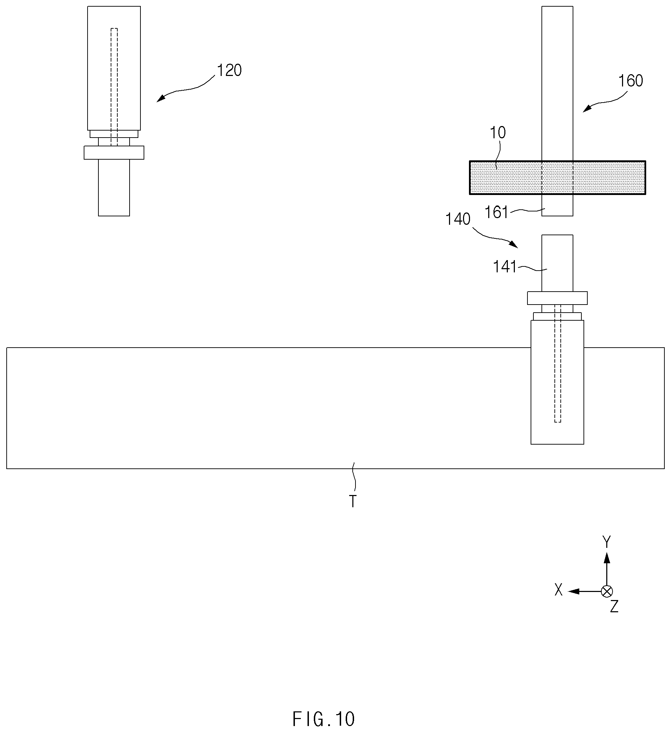

FIG. 9 is a plan view showing a state in which a separator winding roll is being conveyed from a transfer unit to an unwinder in an automatic separator supply apparatus according to an embodiment of the present invention, and FIG. 10 is a plan view showing a state in which a separator winding roll has been conveyed to an unwinder in an automatic separator supply apparatus according to an embodiment of the present invention.

Referring to FIGS. 9 an 10, the unwinder 160 includes the unwinder shaft 161 on which the separator winding roll 10 moved by the transfer unit is mounted, and a separator may be unwound from the separator winding roll 10 mounted to the unwinder shaft 161 when an electrode and the separator are wound.

Here, the unwinder shaft 161 is fixed, and the separator winding roll 10 mounted to the unwinder shaft 161 is rotated. Accordingly, the wound separator may be unwound and supplied when an electrode assembly is wound.

Also, the automatic separator supply apparatus according to an embodiment of the present invention may further include a removal jig for removing the separator winding roll 10 in which the supply of the separator has been completed in the unwinder 160. Accordingly, the separator winding roll 10, in which the supply of the separator has been completed, may be removed from the unwinder 160 by the removal jig, and a separator winding roll 10, on which a separator is wound, may be automatically and continuously mounted to the unwinder 160.

In addition, the automatic separator supply apparatus according to an embodiment of the present invention may further include a control unit for controlling each device. The control unit may control operations of the article supply unit 110, the lift unit 120, the transfer unit 140, and the like.

Referring to FIGS. 3, 6, and 9, in the automatic separator supply apparatus having the above structure according to an embodiment of the present invention, when the electrode assembly is manufactured by winding an electrode and a separator, the separator may be automatically supplied, via the transfer unit 140, to the unwinder 160 that provides the separator to be wound. In addition, the lift unit 120 and the article supply unit 110 are further provided, and thus, the separator may be more easily and automatically supplied.

Furthermore, with reference to the detection value by the lift alignment sensor C2, the lift unit 120 is moved up and down by the lift means 130 to a position at which the lift shaft 121 of the lift unit 120 and the unit shaft 141 of the transfer unit 140 are aligned with each other. Therefore, the separator winding roll 10 may be easily and accurately conveyed to the transfer unit 140.

Moreover, with reference to the detection value by the unwinder alignment sensor C3, the transfer unit 140 is moved horizontally by the traveling means to a position at which the unit shaft 141 of the transfer unit 140 and the unwinder shaft 161 of the unwinder 160 are aligned with each other, and then, the separator winding roll 10 is mounted to the unwinder shaft 161 of the unwinder 160. Therefore, the separator winding roll 10 may be accurately and easily mounted to the unwinder 160.

### [Description of the Symbols]

10: Separator winding roll
110: Article supply unit
111: Supply shaft
112: Supply cylinder shaft
112a: Supply block
112b: Supply movement shaft
113: Supply cylinder
120: Lift unit
121: Lift shaft
122: Lift cylinder shaft
122a: Lift block
122b: Lift movement shaft
123: Lift cylinder
130: Lift means
131: Vertical shaft
132: Moving part
133: Fixing part
134: Movement shaft
140: Transfer unit
141: Unit shaft
142: Transfer cylinder shaft
142a: Transfer block
142b: Transfer movement shaft
143: Transfer cylinder
150: Traveling means
160: Unwinder
161: Unwinder shaft
C1: Supply alignment sensor
C2: Lift alignment sensor
C3: Unwinder alignment sensor
S: Moving jig
S1: Vertical part
S2: Horizontal part

## Claims

1. An automatic separator supply apparatus for supplying a separator winding roll (10), on which a separator is wound, to manufacture an electrode assembly by winding an electrode and the separator, the automatic separator supply apparatus comprising:
a transfer unit (140) which comprises a unit shaft (141) for receiving the separator winding roll (10) and moves the received separator winding roll (10); and
an unwinder (160) which comprises an unwinder shaft (161), to which the separator winding roll (10) moved by the transfer unit (140) is mounted, and unwinds the separator from the separator winding roll (10) mounted to the unwinder shaft (161) when the electrode and the separator are wound,
wherein the transfer unit (140) mounts the separator winding roll (10) to the unwinder shaft (161) of the unwinder (160) after the unit shaft (141) is aligned with the unwinder shaft (161) of the unwinder (160); and
wherein the unit shaft (141) of the transfer unit (140) is positioned at the same height as the unwinder shaft (161) of the unwinder (160), the automatic separator supply apparatus being **characterized in that**
the transfer unit (140) moves horizontally and conveys the separator winding roll (10) to the unwinder (160).

2. The automatic separator supply apparatus of claim 1, wherein the transfer unit (140) further comprises a transfer cylinder (143) and a transfer cylinder shaft (142) mounted to the transfer cylinder (143),
wherein the separator winding roll (10) positioned on the unit shaft (141) is pushed and moved toward the unwinder shaft (161) of the unwinder (160) by movement of the transfer cylinder shaft (142), and the separator winding roll (10) is mounted to the unwinder shaft (161).

3. The automatic separator supply apparatus of claim 1, wherein the transfer unit (140) comprises a traveling means (150) provided in a lower portion of the transfer unit (140), and
the transfer unit (140) is horizontally moved along a support table by the traveling means (150) and conveys the separator winding roll (10) to the unwinder (160).

4. The automatic separator supply apparatus of claim 3, further comprising an unwinder alignment sensor (C3) for detecting an alignment state between the unit shaft (141) of the transfer unit (140) and the unwinder shaft (161) of the unwinder (160).

5. The automatic separator supply apparatus of claim 4, wherein with reference to the detection value by the unwinder alignment sensor (C3), the transfer unit (140) is horizontally moved by the traveling means (150) to a position at which the unit shaft (141) of the transfer unit (140) and the unwinder shaft (161) of the unwinder (160) are aligned with each other.

6. The automatic separator supply apparatus of claim 1, further comprising a lift unit (120) that receives the separator winding roll (10) and conveys the separator winding roll (10) to the transfer unit (140),
wherein the lift unit (120) rotates horizontally and moves vertically to convey the received winding roll (10) to the transfer unit (140).

7. The automatic separator supply apparatus of claim 6, wherein the lift unit (120) comprises a lift shaft (121) on which the received separator winding roll (10) is positioned, and
the lift unit (120) conveys the separator winding roll (10) to the unit shaft (141) of the transfer unit (140) after the lift shaft (121) is aligned with the unit shaft (141) of the transfer unit (140).

8. The automatic separator supply apparatus of claim 7, further comprising a lift alignment sensor (C2) for detecting an alignment state between the lift shaft (121) of the lift unit (120) and the unit shaft (141) of the transfer unit (140).

9. The automatic separator supply apparatus of claim 8, wherein the lift unit (120) comprises a lift means(130) provided in a lower portion of the lift unit (120), and
the lift unit (120) is moved up and down by the lift means (130) and conveys the separator winding roll (10) to the transfer unit (140).

10. The automatic separator supply apparatus of claim 9, wherein with reference to the detection value by the lift alignment sensor (C2), the lift unit (120) is moved up and down by the lift means (130) to a position at which the lift shaft (121) of the lift unit (120) and the unit shaft (141) of the transfer unit (140) are aligned with each other.

11. The automatic separator supply apparatus of claim 6, further comprising an article supply unit (110) that supplies the separator winding roll (10) to the lift unit (120).

## Patentansprüche

1. Automatische Separator-Zuführvorrichtung zum Zuführen einer Separator-Wickelrolle (10), auf welche ein Separator gewickelt ist, um eine Elektrodenanordnung durch Wickeln einer Elektrode und des Separators herzustellen, wobei die automatische Separator-Zuführvorrichtung umfasst:
eine Transfereinheit (140), welche eine Einheitswelle (141) zum Aufnehmen der Separator-Wickelrolle (10) umfasst und welche die aufgenommene Separator-Wickelrolle (10) bewegt; und
eine Abwickeleinheit (160), welche eine Abwickelwelle (161) umfasst, an welche die Separator-Wickelrolle (10) montiert ist, welche von der Transfereinheit (140) bewegt wird, und welche den Separator von der Separator-Wickelrolle (10) abwickelt, welche an der Abwickelwelle (161) montiert ist, wenn die Elektrode und der Separator gewickelt werden,
wobei die Transfereinheit (140) die Separator-Wickelrolle (10) an die Abwickelwelle (161) der Abwickeleinheit (160) montiert, nachdem die Einheitswelle (141) mit der Abwickelwelle (161) der Abwickeleinheit (160) aligniert ist; und
wobei die Einheitswelle (141) der Transfereinheit (140) an der gleichen Höhe wie die Abwickelwelle (161) der Abwickeleinheit (160) positioniert ist, wobei die automatische Separator-Zuführvorrichtung **dadurch gekennzeichnet ist, dass** sich die Transfereinheit (140) horizontal bewegt und die Separator-Wickelrolle (10) zu der Abwickeleinheit (160) bewegt.

2. Automatische Separator-Zuführvorrichtung nach Anspruch 1, wobei die Transfereinheit (140) ferner einen Transferzylinder (143) und eine Transferzylinderwelle (142) umfasst, welche an den Transferzylinder (143) montiert ist,
wobei die Separator-Wickelrolle (10), welche an der Einheitswelle (141) positioniert ist, durch eine Bewegung der Transferzylinderwelle (142) in Richtung der Abwickelwelle (161) der Abwickeleinheit (160) gedrückt und bewegt wird, und wobei die Separator-Wickelrolle (10) an die Abwickelwelle (161) montiert ist.

3. Automatische Separator-Zuführvorrichtung nach Anspruch 1, wobei die Transfereinheit (140) ein Fortbewegungsmittel (150) umfasst, welches in einem unteren Abschnitt der Transfereinheit (140) bereitgestellt ist, und
wobei die Transfereinheit (140) von dem Fortbewegungsmittel (150) entlang eines Stütztisches horizontal bewegt wird und die Separator-Wickelrolle (10) zu der Abwickeleinheit (160) befördert.

4. Automatische Separator-Zuführvorrichtung nach Anspruch 3, ferner umfassend einen Abwickeleinheit-Alignierungssensor (C3) zum Detektieren eines Alignierungszustands zwischen der Einheitswelle (141) der Transfereinheit (140) und der Abwickelwelle (161) der Abwickeleinheit (160).

5. Automatische Separator-Zuführvorrichtung nach Anspruch 4, wobei, unter Bezugnahme auf den Detektionswert von dem Abwickeleinheit-Alignierungssensor (C3), die Transfereinheit (140) von dem Fortbewegungsmittel (150) horizontal zu einer Position bewegt wird, an welcher die Einheitswelle (141) der Transfereinheit (140) und die Abwickelwelle (161) der Abwickeleinheit (160) miteinander aligniert sind.

6. Automatische Separator-Zuführvorrichtung nach Anspruch 1, ferner umfassend eine Hebeeinheit (120), welche die Separator-Wickelrolle (10) aufnimmt und welche die Separator-Wickelrolle (10) zu der Transfereinheit (140) befördert,
wobei die Hebeeinheit (120) horizontal rotiert und sich vertikal bewegt, um die aufgenommene Wickelrolle (10) zu der Transfereinheit (140) zu befördern.

7. Automatische Separator-Zuführvorrichtung nach Anspruch 6, wobei die Hebeeinheit (120) eine Hebewelle (121) umfasst, an welcher die aufgenommene Separator-Wickelrolle (10) positioniert ist, und
wobei die Hebeeinheit (120) die Separator-Wickelrolle (10) zu der Einheitswelle (141) der Transfereinheit (140) befördert, nachdem die Hebewelle (121) mit der Einheitswelle (141) der Transfereinheit (140) aligniert ist.

8. Automatische Separator-Zuführvorrichtung nach Anspruch 7, ferner umfassend einen Hebe-Alignierungssensor (C2) zum Detektieren eines Alignierungszustands zwischen der Hebewelle (121) der Hebeeinheit (120) und der Einheitswelle (141) der Transfereinheit (140).

9. Automatische Separator-Zuführvorrichtung nach Anspruch 8, wobei die Hebeeinheit (120) ein Hebemittel (130) umfasst, welches in einem unteren Abschnitt der Hebeeinheit (120) bereitgestellt ist, und
wobei die Hebeeinheit (120) von dem Hebemittel (130) nach oben und unten bewegt wird und die Separator-Wickelrolle (10) zu der Transfereinheit (140) befördert.

10. Automatische Separator-Zuführvorrichtung nach Anspruch 9, wobei, unter Bezugnahme auf den Detektionswert von dem Hebe-Alignierungssensor (C2), die Hebeeinheit (120) von dem Hebemittel (130) nach oben und unten zu einer Position bewegt wird, an welcher die Hebewelle (121) der Hebeeinheit (120) und die Einheitswelle (141) der Transfereinheit (140) miteinander aligniert sind.

11. Automatische Separator-Zuführvorrichtung nach Anspruch 6, ferner umfassend eine Gegenstand-Zuführeinheit (110), welche die Separator-Wickelrolle (10) zu der Hebeeinheit (120) zuführt.

## Revendications

1. Appareil d'acheminement de séparateur automatique pour l'acheminement d'un rouleau d'enroulement (10) de séparateur, sur lequel un séparateur est enroulé, pour fabriquer un ensemble d'électrodes par l'enroulement d'une électrode et du séparateur, l'appareil d'acheminement de séparateur automatique comprenant :
une unité de transfert (140) qui comprend un arbre d'unité (141) pour la réception du rouleau d'enroulement (10) de séparateur et déplace le rouleau d'enroulement (10) de séparateur reçu ; et
un dérouleur (160) qui comprend un arbre de dérouleur (161), sur lequel le rouleau d'enroulement (10) de séparateur déplacé par l'unité de transfert (140) est monté, et déroule le séparateur à partir du rouleau d'enroulement (10) de séparateur monté sur l'arbre de dérouleur (161) lorsque l'électrode et le séparateur sont enroulés,
dans lequel l'unité de transfert (140) monte le rouleau d'enroulement (10) de séparateur sur l'arbre de dérouleur (161) du dérouleur (160) après que l'arbre d'unité (141) est aligné avec l'arbre de dérouleur (161) du dérouleur (160) ; et
dans lequel l'arbre d'unité (141) de l'unité de transfert (140) est positionné à la même hauteur que l'arbre de dérouleur (161) du dérouleur (160), l'appareil d'acheminement de séparateur automatique étant **caractérisé en ce que**
l'unité de transfert (140) se déplace horizontalement et transporte le rouleau d'enroulement (10) de séparateur jusqu'au dérouleur (160).

2. Appareil d'acheminement de séparateur automatique selon la revendication 1, dans lequel l'unité de transfert (140) comprend en outre un cylindre de transfert (143) et un arbre de cylindre de transfert (142) monté sur le cylindre de transfert (143),
dans lequel le rouleau d'enroulement (10) de séparateur positionné sur l'arbre d'unité (141) est poussé et déplacé vers l'arbre de dérouleur (161) du dérouleur (160) par un déplacement de l'arbre de cylindre de transfert (142), et le rouleau d'enroulement (10) de séparateur est monté sur l'arbre de dérouleur (161).

3. Appareil d'acheminement de séparateur automatique selon la revendication 1, dans lequel l'unité de transfert (140) comprend un moyen d'avancement (150) ménagé dans une partie inférieure de l'unité de transfert (140), et
l'unité de transfert (140) est déplacée horizontalement le long d'une table de support par le moyen d'avancement (150) et transporte le rouleau d'enroulement (10) de séparateur jusqu'au dérouleur (160).

4. Appareil d'acheminement de séparateur automatique selon la revendication 3, comprenant en outre un capteur d'alignement de dérouleur (C3) pour la détection d'un état d'alignement entre l'arbre d'unité (141) de l'unité de transfert (140) et l'arbre de dérouleur (161) du dérouleur (160).

5. Appareil d'acheminement de séparateur automatique selon la revendication 4, dans lequel, en référence à la valeur de détection par le capteur d'alignement de dérouleur (C3), l'unité de transfert (140) est déplacée horizontalement par le moyen d'avancement (150) jusqu'à une position à laquelle l'arbre d'unité (141) de l'unité de transfert (140) et l'arbre de dérouleur (161) du dérouleur (160) sont alignés l'un avec l'autre.

6. Appareil d'acheminement de séparateur automatique selon la revendication 1, comprenant en outre une unité de levage (120) qui reçoit le rouleau d'enroulement (10) de séparateur et transporte le rouleau d'enroulement (10) de séparateur jusqu'à l'unité de transfert (140),
dans lequel l'unité de levage (120) est horizontalement en rotation et se déplace verticalement pour transporter le rouleau d'enroulement (10) reçu jusqu'à l'unité de transfert (140).

7. Appareil d'acheminement de séparateur automatique selon la revendication 6, dans lequel l'unité de levage (120) comprend un arbre de levage (121) sur lequel le rouleau d'enroulement (10) de séparateur reçu est positionné, et
l'unité de levage (120) transporte le rouleau d'enroulement (10) de séparateur jusqu'à l'arbre d'unité (141) de l'unité de transfert (140) après que l'arbre de levage (121) est aligné avec l'arbre d'unité (141) de l'unité de transfert (140).

8. Appareil d'acheminement de séparateur automatique selon la revendication 7, comprenant en outre un capteur d'alignement de levage (C2) pour la détection d'un état d'alignement entre l'arbre de levage (121) de l'unité de levage (120) et l'arbre d'unité (141) de l'unité de transfert (140).

9. Appareil d'acheminement de séparateur automatique selon la revendication 8, dans lequel l'unité de levage (120) comprend un moyen de levage (130) ménagé dans une partie inférieure de l'unité de levage (120), et
l'unité de levage (120) est déplacée vers le haut et vers le bas par le moyen de levage (130) et transporte le rouleau d'enroulement (10) de séparateur jusqu'à l'unité de transfert (140).

10. Appareil d'acheminement de séparateur automatique selon la revendication 9, dans lequel, en référence à la valeur de détection par le capteur d'alignement de levage (C2), l'unité de levage (120) est déplacée vers le haut et vers le bas par le moyen de levage (130) jusqu'à une position à laquelle l'arbre de levage (121) de l'unité de levage (120) et l'arbre d'unité (141) de l'unité de transfert (140) sont alignés l'un avec l'autre.

11. Appareil d'acheminement de séparateur automatique selon la revendication 6, comprenant en outre une unité d'acheminement d'article (110) qui achemine le rouleau d'enroulement (10) de séparateur jusqu'à l'unité de levage (120).
